(19) Europäisches Patentamt
European Patent Office
Office européen des brevets

(11) EP 4 310 020 A1

(12) **EUROPEAN PATENT APPLICATION**
published in accordance with Art. 153(4) EPC

(43) Date of publication:
**24.01.2024 Bulletin 2024/04**

(21) Application number: **22771433.4**

(22) Date of filing: **15.03.2022**

(51) International Patent Classification (IPC):
***B65D 65/46*** *(2006.01)* ***B65D 77/04*** *(2006.01)*
***C08J 3/20*** *(2006.01)* ***B29B 7/24*** *(2006.01)*

(52) Cooperative Patent Classification (CPC):
**B29B 7/24; B65D 65/46; B65D 77/04; C08J 3/20**

(86) International application number:
**PCT/JP2022/011607**

(87) International publication number:
**WO 2022/196688 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.03.2021 JP 2021044606**

(71) Applicant: **Kuraray Co., Ltd.**
**Kurashiki-shi, Okayama 710-0801 (JP)**

(72) Inventors:
- **KANBARA, Hiroshi**
  **Kamisu-shi, Ibaraki 314-0197 (JP)**
- **OHTA, Satomi**
  **Kamisu-shi, Ibaraki 314-0197 (JP)**

(74) Representative: **Müller-Boré & Partner Patentanwälte PartG mbB**
**Friedenheimer Brücke 21**
**80639 München (DE)**

(54) **MATERIAL FOR RUBBER KNEADING, SEALED PACKAGE USING MATERIAL FOR RUBBER KNEADING, METHOD FOR PRODUCING MATERIAL FOR RUBBER KNEADING, AND METHOD FOR PRODUCING RUBBER COMPOSITION**

(57) To provide a compounding material for rubber kneading capable of securely supplying a predetermined amount of liquid diene-based rubber (B) and being excellent in handleability, and a sealed package using the compounding material for rubber kneading.

Provided is a compounding material for rubber kneading including: a sealing pouch (A) having an outer layer with a thickness of 30 to 100 μm that is made of a polymer (a) with a melting point of 60 to 140°C, and a liquid diene-based rubber (B) sealed inside the sealing pouch (A). Also provided is a sealed package including: a sealing container with low water vapor permeability, and the compounding material for rubber kneading sealed inside the sealing container.

[Fig. 2]

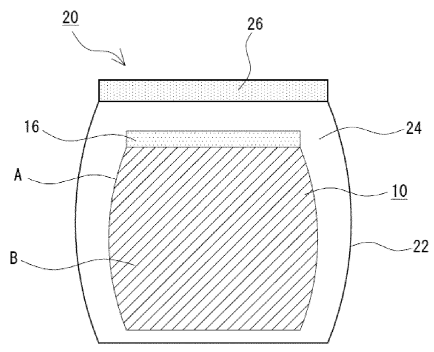


EP 4 310 020 A1

## Description

Technical Field

The present invention relates to a compounding material for rubber kneading and a sealed package using the compounding material for rubber kneading. The present invention further relates to a method for producing a compounding material for rubber kneading and a method for producing a rubber composition.

Background Art

Conventionally, a plasticizer may be added to a rubber composition used as a raw material for cross-linked rubbers for the purpose of improving, for example, processability upon manufacture thereof. However, oils, which are commonly used as a plasticizer, may cause a bleed-out problem. In order to solve this problem, the use of liquid diene-based rubber as one component of a rubber composition has been conventionally investigated as a plasticizer that is as effective in plasticization as oil and is capable of co-cross-linking with solid rubber that is the main component of the rubber composition (see, for example, Patent Literature 1) .

Moreover, the liquid diene-based rubber, which is capable of imparting excellent adhesive properties, may also be used in a rubber composition that requires adhesive properties. For example, a rubber composition containing maleic anhydride-modified liquid diene-based rubber as liquid diene-based rubber has been investigated in order to improve adhesiveness to highly polar materials such as metallic materials (see, for example, Patent Literature 2).

Furthermore, in recent years, rubber compositions having improved mechanical strengths by compounding fillers such as silica and carbon black to solid rubber have been widely used, for example, in tire applications requiring wear resistance and mechanical strength. In order to achieve excellent physical properties of cross-linked products obtained from rubber compositions compounded with these fillers, the use of a rubber composition containing liquid diene-based rubber with a silanol group that is reactive to silica, has been investigated in order to render a dispersion condition of fillers in such a cross-linked product an ideal condition (see, for example, Patent Literature 3).

Citation List

Patent Literature

Patent Literature 1: JP57-047337A
Patent Literature 2: JP55-048231A
Patent Literature 3: WO2018/043699A


Summary of Invention

Technical Problem

However, even though liquid diene-based rubber is preliminarily weighed in some container and is then tried to be fed directly into an apparatus for rubber kneading, the liquid diene-based rubber is highly viscous and likely to remain in the container, which causes a problem in terms of workability. It is conceivable to feed the entire container including the liquid diene-based rubber into the apparatus for rubber kneading, however, a material forming the container may be assumed to adversely affect the properties of the rubber composition.

Moreover, liquid diene-based rubber with a functional group, in particular liquid diene-based rubber with a group that is highly reactive to water, such as a silanol group and alkoxysilyl group, is desirably in a condition such that the characteristics of the group are not impaired as much as possible for industrial use, even though the rubber is stored for a long period of time.

The present invention has been made in view of such present situations, and an object of the present invention is to provide a compounding material for rubber kneading capable of securely supplying a predetermined amount of liquid diene-based rubber (B) and being excellent in handleability, and a sealed package using the compounding material for rubber kneading.

Another object of the present invention is to provide a method for producing a compounding material for rubber kneading capable of securely supplying a predetermined amount of liquid diene-based rubber (B) while maintaining its physical properties in predetermined conditions.

Another object of the present invention is to provide a method for producing a rubber composition with excellent

workability.

Solution to Problem

The present inventors have found as a result of diligent investigations that the aforementioned problems can be solved according to a compounding material for rubber kneading in which liquid diene-based rubber is sealed inside a specific sealing pouch, and a sealed package in which the compounding material for rubber kneading is sealed inside a specific sealing container. Namely, the present invention relates to the following [1] to [13].

[1] A compounding material for rubber kneading, comprising:

a sealing pouch (A) with a thickness of 30 to 100 μm that is made of a polymer (a) with a melting point of 60 to 140°C, and
a liquid diene-based rubber (B) sealed inside the sealing pouch (A).

[2] The compounding material for rubber kneading according to [1], wherein the polymer (a) is at least one selected from the group consisting of a low density polyethylene, a linear low density polyethylene, a high density polyethylene, an ethylene-vinyl acetate copolymer, and a syndiotactic-1,2-polybutadiene.
[3] A sealed package, comprising:

a sealing container (C) with low water vapor permeability, and
the compounding material for rubber kneading according to [1] or [2] sealed inside the sealing container (C).

[4] The sealed package according to [3], wherein a material of the sealing container (C) has a water vapor transmission rate of 4.0 $g/m^{2}\cdot$ 24h or less.
[5] The sealed package according to [3] or [4], wherein the sealing container (C) is a container made of at least one material selected from the group consisting of a metal plate, and a polymeric sheet or film on which an inorganic layer is stacked.
[6] The sealed package according to any one of [3] to [5], wherein the liquid diene-based rubber (B) is a liquid diene-based rubber (B1) having a group that is highly reactive to water.
[7] The sealed package according to any one of [3] to [6],
wherein a shape of the sealing container is in form of a bag or a drum, or boxy.
[8] The sealed package according to any one of [3] to [7], wherein a desiccant is further disposed inside the sealing container (C).
[9] A method for producing a compounding material for rubber kneading, comprising at least:

a loading step of loading a liquid diene-based rubber (B) from an opening of a sealing pouch (A) with a thickness of 30 to 100 μm that is made of a polymer (a) with a melting point of 60 to 140°C, into the sealing pouch (A), and
a sealing step of sealing the opening of the sealing pouch (A) after the loading step.

[10] The method for producing a compounding material for rubber kneading according to [9],
wherein, in the sealing step, the sealing of the opening is carried out by heat sealing.
[11] A method for producing a sealed package, comprising at least:

a feed step of feeding the compounding material for rubber kneading according to [1] or [2] from an opening of a sealing container (C) with low water vapor permeability; and
a sealing step of sealing the opening of the sealing container (C) after the feed step.

[12] The method for producing a sealed package according to [11],
wherein, in the sealing step, the sealing of the opening is carried out by heat sealing.
[13] A method for producing a rubber composition, comprising a kneading step of kneading the compounding material for rubber kneading according to [1] or [2] and a solid rubber.

Advantageous Effects of Invention

According to the compounding material for rubber kneading of the present invention, the liquid diene-based rubber (B) is sealed in the sealing pouch (A), and therefore a predetermined amount of liquid diene-based rubber (B), which has been difficult to be handled, can be securely supplied.

Furthermore, according to the sealed package of the present invention, the sealing pouch (A) and the sealing container (C) form a double-sealed structure, from which the liquid diene-based rubber (B) can be securely supplied in a predetermined amount while maintaining its physical properties in predetermined conditions.
Moreover, according to the method for producing a compounding material for rubber kneading of the present invention, the liquid diene-based rubber (B) can be securely sealed by the simple step, thereby enabling handleability of the liquid diene-based rubber (B) to be improved.
Furthermore, according to the method for producing a rubber composition of the present invention, the composition can be made with favorable workability.

Brief Description of Drawings

[Figure 1] Figure 1 is a schematic view illustrating the compounding material for rubber kneading of the present invention.
[Figure 2] Figure 2 is a schematic view illustrating an embodiment of the sealed package of the present invention.
[Figure 3] Figure 3 is a schematic view illustrating another embodiment of the sealed package of the present invention.
[Figure 4] Figure 4 is a schematic view illustrating another embodiment of the sealed package of the present invention.
[Figure 5] Figure 5 is a process view illustrating the production step of a compounding material for rubber kneading of the present invention.
[Figure 6] Figure 6 is a process view illustrating the production step of a sealed package of the present invention.

Description of Embodiments

Embodiments of the present invention will be described in detail based on the drawings below.

<Compounding material 10 for rubber kneading>

As shown in Figure 1, the compounding material 10 for rubber kneading of the present invention comprises a sealing pouch (A) and a liquid diene-based rubber (B) sealed inside the sealing pouch (A), and in particular the sealing pouch (A) is a sealing pouch with a thickness of 30 to 100 μm that is made of a polymer (a) with a melting point of 60 to 140°C.
The liquid diene-based rubber (B) is a liquid polymer and includes a conjugated diene unit derived from a conjugated diene as a monomer unit constituting the polymer. Examples of the conjugated diene include, for example, butadiene, isoprene, α-farnesene, β-farnesene; and conjugated dienes (b1) other than butadiene, isoprene, α-farnesene, and β-farnesene, such as 2,3-dimethylbutadiene, 2-phenylbutadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene, and chloroprene. Conjugated dienes that become conjugated diene units included in the liquid diene-based rubber (B), are preferably isoprene, butadiene, α-farnesene, and β-farnesene, and more preferably isoprene, butadiene, and β-farnesene. These conjugated dienes may be used singly or in combinations of two or more thereof.
A preferred aspect of the liquid diene-based rubber (B) is that it has 50% by mass or more of monomer units derived from at least one monomer selected from the group consisting of isoprene, butadiene, α-farnesene, and β-farnesene, among all the monomer units constituting a polymer of the liquid diene-based rubber (B). The total content of isoprene units, butadiene units, α-farnesene units, and β-farnesene units is preferably 60 to 100% by mass, more preferably 70 to 100% by mass, further preferably 80 to 100% by mass, and particularly preferably 90 to 100% by mass, relative to the total monomer unit of the liquid diene-based rubber (B), and it may be substantially 100% by mass.
Examples of other monomer units other than the isoprene unit, butadiene unit, α-farnesene unit, and β-farnesene unit, which can be included in the aforementioned liquid diene-based rubber (B) include, for example, the conjugated diene (b1) unit other than butadiene and isoprene as described above and an aromatic vinyl compound (b2) unit.
The aromatic vinyl compound (b2) is preferably styrene, α-methylstyrene, and 4-methylstyrene.
The content of other monomer units other than the butadiene unit, isoprene unit, α-farnesene unit, and β-farnesene unit in the above liquid diene rubber (B), is preferably 50% or less by mass, more preferably 45% or less by mass, further preferably 40% or less by mass, particularly preferably 35% or less by mass, and most preferably 30% or less by mass. For example, when the aromatic vinyl compound (b2) unit stays in the aforementioned range or less than the left boundary thereof, processability of a rubber composition tends to be improved.
The liquid diene-based rubber (B) may be an unmodified polymer including conjugated diene units, a modified polymer including conjugated diene units modified by functional groups, or a hydrogenated polymer or hydrogenated modified polymer in which at least a moiety of carbon-carbon double bonds of the conjugated diene units included in

the unmodified polymer or modified polymer, is hydrogenated. Furthermore, the modified polymer including conjugated diene units modified by functional groups may be a liquid diene-based rubber (B1) having a group that is highly reactive to water.

In a case in which the liquid diene-based rubber (B) is a modified polymer including conjugated diene units modified by functional groups, examples of the functional groups include, for example, an amino group, amide group, imino group, nitrile group, imidazole group, urea group, hydroxyl group, ether group, carboxyl group, carbonyl group, alkoxysilyl group, epoxy group, mercapto group, thiol group, disulfide group, trisulfide group, tetrasulfide group, isocyanate group, acid anhydride groups such as a carboxylic anhydride group, functional groups derived from acid anhydrates, such as a dicarboxylic acid monoester group and dicarboxylic acid monoamide group, boronic acid ester group, vinyl group, acryloyl group, and methacryloyl group.

Examples of methods for producing the above modified polymers include, a method involving adding a coupling agent, a polymerization end modifying agent or another modifying agent as described in JP2011-132298A, before adding a polymerization terminator. The coupling agents include tin tetrachloride, dibutyltin chloride, tetrachlorosilane, dimethyldichlorosilane, dimethyldiethoxysilane, tetramethoxysilane, tetraethoxysilane, 3-aminopropyltriethoxysilane, tetraglycidyl-1,3-bisaminomethylcyclohexane, and 2,4-tolylenediisocyanate. The polymerization end modifying agents include 4,4'-bis(diethylamino)benzophenone, N-vinylpyrrolidone, N-methylpyrrolidone, 4-dimethylaminobenzylideneaniline, and dimethylimidazolidinone. Moreover, it is possible to use a modified polymer obtained by adding, to the isolated unmodified liquid diene-based rubber, a modifying compound, for example, an unsaturated carboxylic acid, unsaturated carboxylic acid derivative, or a silane compound having a group that reacts with a carbon-carbon unsaturated bond contained in a conjugated diene unit.

Examples of the aforementioned unsaturated carboxylic acids include maleic acid, fumaric acid, itaconic acid, and (meth)acrylic acid.

Examples of the aforementioned unsaturated carboxylic acid derivatives include, for example, unsaturated dicarboxylic anhydrides such as maleic anhydride and itaconic anhydride; unsaturated dicarboxylic acid monoesters such as a maleic acid monoester, itaconic acid monoester and fumaric acid monoester; (meth)acrylates ester such as glycidyl (meth)acrylate and hydroxyethyl (meth)acrylate; unsaturated dicarboxylic acid monoamides such as maleic acid monoamide, itaconic acid monoamide, and fumaric acid monoamide; and unsaturated carboxylic acid imides such as maleic acid imide and itaconic acid imide.

As the silane compounds having a group that reacts with a carbon-carbon unsaturated bond included in a conjugated diene unit, the silane compound represented by the following formula (1) is an example of a suitable compound.

[Chem. 1]

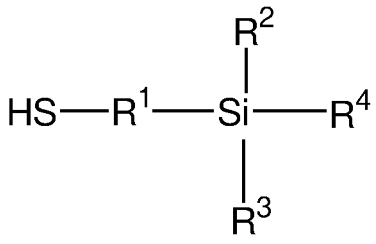

(1)

In formula (1) above, $R^1$ is a divalent alkylene group having 1 to 6 carbon atoms. Examples of the divalent alkylene groups having 1 to 6 carbon atoms include a methylene group, ethylene group, propylene group, butylene group, pentylene group, and hexylene group; $R^2$, $R^3$, and $R^4$ each independently indicate a methoxy group, ethoxy group, phenoxy group, methyl group, ethyl group, or phenyl group. However, at least one of $R^2$, $R^3$, and $R^4$ is a methoxy group, ethoxy group or phenoxy group.

The method for adding the modifying compound to unmodified liquid diene-based rubber is not particularly limited, and for example, a method can be adopted that includes adding the modifying compound and further a radical catalyst, if necessary, into the liquid diene-based rubber, followed by heating in the presence or absence of an organic solvent. An age resistor may be added upon heating.

A weight-average molecular weight (Mw) of the liquid diene-based rubber (B) is preferably 1,000 or more and 500,000 or less, more preferably 2,000 or more and 300,000 or less, further preferably 2,000 or more and 200,000 or less, still further preferably 2,000 or more and 150,000 or less, and particularly preferably 2,000 or more and 100,000 or less. The Mw of the liquid diene-based rubber (B) within the aforementioned range allows a rubber composition with excellent characteristics such as favorable processability of the rubber composition of the present invention, to be obtained. It is to be noted that the Mw of liquid diene-based rubber (B) used herein is a weight-average molecular weight

in terms of standard polystyrenes measured by gel permeation chromatography (GPC). In the present invention, two or more types of liquid diene-based rubber (B) with different Mws may be combined for use.

A molecular weight distribution (Mw/Mn) of the liquid diene-based rubber (B) is preferably from 1.0 to 20.0, more preferably from 1.0 to 15.0, further preferably from 1.0 to 10.0, still further preferably from 1.0 to 5.0, particularly preferably from 1.0 to 3.0, more particularly preferably from 1.0 to 2.0, and extremely preferably from 1.0 to 1.5. The Mw/Mn within the aforementioned range renders smaller viscosity variations of the resulting liquid diene-based rubber (B), which is preferred. The molecular weight distribution (Mw/Mn) refers to a ratio of a weight-average molecular weight (Mw)/a number-average molecular weight (Mn) in terms of standard polystyrenes obtained by GPC measurement.

A multimer area ratio of the liquid diene-based rubber (B) is preferably 40% or less, more preferably 35% or less, further preferably 30% or less, and still further preferably 25% or less. Within the aforementioned range of the multimer area ratio, viscosity variations of the resulting liquid diene-based rubber (B) become smaller, which is more preferred. It is to be noted that the multimer area ratio refers to a proportion of polymers, molecular weights of which are in a region of a Mt (peak top molecular weight) $\times$ 1.45 or more, as the total area derived from polymers in the GPC chromatogram, obtained by GPC measurement being 100%.

A melt viscosity of the above liquid diene-based rubber (B) measured at 38°C is preferably 0.1 to 4,000 Pa·s, more preferably 0.1 to 3,500 Pa·s, and further preferably 0.1 to 3,000 Pa·s. When the melt viscosity of the liquid diene-based rubber (B) is within the aforementioned range, flexibility of the resulting rubber composition is improved, thereby enhancing processability. It is to be noted that the melt viscosity of the liquid diene-based rubber (B) used herein is the value measured by a Brookfield viscometer (type B viscometer) at 38°C.

A method for producing the liquid diene-based rubber (B) is not particularly limited, and it can be produced, for example, by an anionic polymerization method.

The liquid diene-based rubber (B) inside the sealing pouch (A) is sealed inside the sealing pouch (A) by closing the top opening (not shown) of the sealing pouch (A). A means that closes the top opening of the sealing pouch (A) is not particularly limited, and heat sealing (heat welding) can be employed, for example. In Figure 1, a sign 16 denotes a sealed region.

The sealing pouch (A) is made of the polymer (a), and the melting point of the polymer (a) is from 60 to 140°C. The melting point of the polymer (a) within this range inhibits the liquid diene-based rubber (B) from leaking upon storage or use of the compounding material for rubber kneading, thereby rendering excellent workability. Moreover, melting and dispersion of the sealing pouch in the course of kneading solid rubber and the compounding material for rubber kneading, enable minimization of the adverse effects on characteristics of the rubber composition. In view of further achieving the inhibition of leakage, workability, and characteristics of the rubber composition, the melting point of the polymer (a) is preferably 70 to 130°C and more preferably 80 to 120°C. In view of the inhibition of leakage, the melting point of the polymer (a) is preferably higher than 100°C and 140°C or lower, more preferably 103 to 140°C, and further preferably 105 to 140°C.

A thickness of the sealing pouch (A) is from 30 to 100 μm. The thickness of the sealing pouch within this range inhibits the liquid diene-based rubber (B) from leaking upon storage or use of the compounding material for rubber kneading, thereby rendering excellent workability. Moreover, melting and dispersion of the sealing pouch in the course of kneading solid rubber and the compounding material for rubber kneading also enable minimization of the adverse effects on characteristics of the rubber composition. In view of further achieving the inhibition of leakage, workability, and characteristics of the rubber composition, the thickness of the sealing pouch (A) is preferably 30 to 80 μm and more preferably 40 to 70 μm.

The sealing pouch (A) is composed of the film of polymer (a) as described above, and a heat seal strength of the film is preferably 1.0 N/15 mm or more, more preferably 2.5 N/15 mm or more, and more preferably 4.0 N/15 mm or more. Moreover, the heat seal strength of the film is preferably normally 40 N/15 mm or less and more preferably 25 N/15 mm or less. The heat seal strength is the value measured in accordance with the heat seal strength test for bags in JIS Z 0238: Testing methods for heat sealed flexible packages and semi rigid containers.

Furthermore, the polymer (a) constituting the sealing pouch (A) is preferably at least one selected from the group consisting of a low density polyethylene, linear low density polyethylene, high density polyethylene, ethylene-vinyl acetate copolymer, and syndiotactic-1,2-polybutadiene, and more preferably at least one selected from the group consisting of a low density polyethylene, ethylene-vinyl acetate copolymer, and syndiotactic-1,2-polybutadiene. Moreover, in view of inhibition of leakage, the polymer (a) is preferably at least one selected from the group consisting of a low density polyethylene, linear low density polyethylene, and high density polyethylene.

In order to facilitate use of the compounding material for rubber kneading obtained in the present invention upon rubber kneading, the liquid diene-bases rubber (B) is preferably weighed and sealed upon sealing it in the sealing pouch (A).

Since the compounding material 10 for rubber kneading having such a configuration in which the liquid diene-based rubber (B) is sealed in the sealing pouch (A), the liquid diene-based rubber (B), which has been difficult to be handled so far, can improve its handleability, thereby enabling its secure supply in predetermined quantity.

When a large amount of liquid diene-based rubber (B) is fed into the sealing pouch (A), or the liquid diene-based rubber is to be more securely inhibited from being leaked, for example, the compounding material 10 for rubber kneading of the present invention may be used with the sealing pouches double bagged or triple bagged. In such cases, as the sealing pouch (A), a plurality of sealing pouches (A) of similar thicknesses that is made of a polymer (a) having the similar melting point, may be used. In such a case, the configuration may be such that, for example, the liquid diene-based rubber (B) is introduced inside the innermost pouch from the top opening of the sealing pouches (A) bagged in a multiple manner, and then the opening is closed to achieve sealing. As a means that closes the top opening, heat sealing (heat welding) can be employed, for example, as in the above case.

<Sealed package 20>

Next, a sealed package 20 in which handleability of the compounding material 10 for rubber kneading has been further improved, will be described.

As shown in Figure 2, the sealed package 20 of the present invention comprises a sealing container 22 with low water vapor permeability (sealing container (C)) and the aforementioned compounding material 10 for rubber kneading sealed inside the sealing container 22.

Here, the low water vapor permeability of the sealing container 22 means that the sealing container has low performance of water vapor permeation. Water vapor transmission rate of a material of the sealing container 22 is preferably 4.0 $g/m^2 \cdot 24h$ or less, more preferably 2.0 $g/m^2 \cdot 24h$ or less, further preferably 1.0 $g/m^2 \cdot 24h$ or less, and still further preferably 0.5 $g/m^2 \cdot 24h$ or less.

The aforementioned sealing container is preferably a container made of at least one material selected from the group consisting of a metal plate, and a polymeric sheet or film on which an inorganic layer is stacked.

Examples of the metal plates include, for example, steel sheets such as a stainless steel sheet, aluminum plate, tin-free steel (tin-free steel sheet), and tin plate.

Examples of the polymeric sheet or film on which an inorganic layer is stacked include, for example, a polymeric sheet or film on which an inorganic layer is vapor deposited, a polymeric sheet or film to which an inorganic layer is jointed via an adhesive, or a polymeric sheet or film to which an inorganic layer (typically a metal layer) is jointed via a molten thermoplastic polymeric film (typically a polymeric sheet or film on which the inorganic layer is laminated).

Inorganic materials constituting the inorganic layer are classified broadly into metals and non-metallic inorganic materials.

Examples of the metals include, for example, aluminum, copper, and zinc. Examples of the non-metallic inorganic materials include, for example, alumina and silica. Among these inorganic materials, metals are preferred and aluminum is more preferred in terms of moisture permeation resistance.

Examples of polymers constituting the polymeric sheet or film include, for example, polyethylene terephthalate (PET), nylon, low density polyethylene (LDPE), and linear low density polyethylene (LLDPE).

The aforementioned sealing container is preferably a polymeric sheet or film on which an inorganic layer is stacked, from the viewpoint of, for example, handleability, and more preferably a polymeric sheet or film on which an aluminum layer is stacked, in view of further improving low moisture permeation. Moreover, in view of further improving low moisture permeation, a polymeric sheet or film laminated with an inorganic layer is preferred, and a polymeric sheet or film laminated with an aluminum layer is more preferred.

The polymeric sheet or film may be a polymeric sheet or film on which a plurality of polymers is stacked. For example, in view of inhibiting cracks and pinholes in the inorganic layer, the polymeric sheet or film may be a stacked film that has an outer layer composed of a polymer with excellent scratch resistance, such as PET or nylon, for the outermost layer of the sealing container, and that has an inorganic layer inside the outer layer. In order to enhance thermal weldability of the polymeric sheet or film, the innermost layer of the sealing container may be LLDPE. In view of the above, a polymeric sheet or film having a layer structure in which a PET (outermost layer)/LLDPE (innermost layer), nylon (outermost layer)/LLDPE (innermost layer) are stacked in this order, is a preferred aspect, and in view of improving low moisture permeation resistance, a polymeric sheet or film having a layer structure in which a PET (outermost layer)/inorganic material (inner layer)/LLDPE (innermost layer), nylon (outermost layer)/inorganic material (inner layer)/LLDPE (innermost layer), is a more preferred aspect. It is to be noted that a layer other than those described above may be included in the stacked films of the preferred aspect and the more preferred aspect.

Such a sealing container 22 is particularly effective in the case of the liquid diene-based rubber (B1) having a group that is highly reactive to water, as the liquid diene-based rubber (B) of the compounding material 10 for rubber kneading. Examples of the group that is highly reactive to water, include, for example, an alkoxysilyl group, isocyanate group, boronic acid ester group, and functional groups derived from an acid anhydride. These groups may be contained in the liquid diene-based rubber (B1) singly or contained in combinations of two or more groups.

In the case of the liquid diene-based rubber (B1) having a group that is highly reactive to water, it is particularly required to prevent reaction with water, and such a sealing container 22 has low water vapor permeability and thereby

can provide a compounding material 10 for rubber kneading that securely maintains the characteristics of the above groups contained in the liquid diene-based rubber (B1) until rubber kneading is carried out.

The sealing container 22 is sealed by closing the top opening (not shown) of the sealing container 22. A means that seals the top opening of the sealing container 22 is not particularly limited, and heat sealing (heat welding) can be employed, for example. In Figure 2, the sign 26 is a sealed region.

The shape of the sealing container 22 is preferably in the form of a bag as in the sealing pouch (A) for the compounding material 10 for rubber kneading described above; however, a drum-shaped sealing container 22 having a configuration such that the main body 28 and a lid body 30 which are suitable for repeated use, as shown in Figure 3, are fixed by a metal band (not shown) or in a convex-concave mating manner, or a boxy sealing container 22 as shown in Figure 4 is also possible. A contact area between the body 28 and the lid body 30 may be fitted with a gasket or packing in order to further enhance sealing. In short, the sealing container is not particularly limited as long as it is of a form that enables the compounding material 10 for rubber kneading to be conveyed in a securely sealed condition.

In addition, a desiccant (not shown) may be disposed in an inner space 24 of the sealing container 22. Alternatively, the inner space 24 may be filled with a dry nitrogen gas or air, or the dry nitrogen gas or air and a desiccant (not shown) may be combined for use.

Thus, according to the sealed package 20 of the present invention, a predetermined amount of liquid diene-based rubber (B) can be securely supplied while the physical properties of the liquid diene-based rubber (B) are maintained in predetermined conditions because of the double-sealed structure by the sealing pouch (A) and the sealing container 22.

In the above description, the example in which one compounding material 10 for rubber kneading has been sealed in one sealing container 22 to make the sealed package 20, however, from the viewpoint of, for example, handleability, two or more compounding materials 10 for rubber kneading may be sealed in one sealing container 22 to provide the sealed package of the present invention. Of course, the sealing pouch (A) for the compounding material 10 for rubber kneading may be used as is or used in a single-bag or in double or multiple-bags.

<Method for producing compounding material 10 for rubber kneading>

Next, the method for producing a compounding material 10 for rubber kneading will be described.

First of all, as shown in Figure 5(a), a sealing pouch (A) with an opening 12 at the top is prepared.

Next, as shown in Figure 5(b), the liquid diene-based rubber (B) is loaded into the sealing pouch (A).

Then, as shown in Figure 5(c), when a predetermined amount of liquid diene-based rubber (B) has been fed in the sealing pouch (A), the liquid diene-based rubber (B) is completed to be loaded.

Finally, as shown in Figure 5(d), the opening 12 of the sealing pouch (A) is sealed to complete the compounding material 10 for rubber kneading.

In a case in which the sealing pouch (A) is to be double or multiple bagged, the compounding material 10 for rubber kneading may be completed by preparing sealing pouches (A) bagged in a multiple manner, then loading the liquid diene-based rubber (B) into the innermost sealing pouch (A) from the top openings 12 of the sealing pouches (A) bagged in a multiple manner, and finally sealing this opening 12 by, for example, heat sealing. Moreover, in a case in which the sealing pouch (A) is to be double or multiple bagged, the compounding material 10 for rubber kneading may also be completed as follows, taking into consideration, for example, workability and that liquid more hardly leaks. Namely, a pouch is provided, the liquid diene-based rubber (B) is loaded into the pouch from the opening 12 at the top of the pouch, and the opening 12 is sealed by, for example, heat sealing. Thereafter, a bag is further bagged on the outside of the bag loaded with the liquid diene-based rubber (B), and the opening of the bag double bagged is sealed by, for example, heat sealing, this procedure is repeated several times as necessary to complete a compounding material 10 for rubber kneading.

Thus, the method for producing a compounding material 10 for rubber kneading of the present invention securely enables sealing of the liquid diene-based rubber (B) by a simple step and enhancement of handleability of the liquid diene-based rubber (B).

<Method for producing sealed packages 20>

As a method for producing a sealed package 20, a case of using a bag-shaped sealing container 22, will be described as an example.

First, as shown in Figure 6(a), the bag-shaped sealing container 22 with an opening 32 at the top is prepared.

Next, as shown in Figure 6(b), a compounding material 10 for rubber kneading is fed inside the sealing container 22 from the opening 32 of the sealing container 22.

Further, as shown in Figure 6(c), the opening 32 of the sealing container 22 is sealed to complete a sealed package 20.

When the opening 32 of the sealing container 22 is sealed, for example, heat sealing (heat welding) is employed,

and in this case, a dry nitrogen gas or air may be purged in an inner space 24 of the sealing container 22. Furthermore, a desiccant (not shown) may be disposed in the inner space 24 of the sealing container 22, or a dry nitrogen gas or air and a desiccant (not shown) may be combined for use.

In such a manner, the method for producing a sealed package 20 of the present invention securely enables sealing of the compounding materials 10 for rubber kneading by a simple step.

It is to be noted that the compounding material 10 for rubber kneading is not limited to that sealed singly in one sealing container 22, and two or more compounding materials 10 for rubber kneading may be sealed in one sealing container 22.

In the aforementioned method for producing a sealed package 20, the example of the case of having used a bag-shaped sealing container 22 was described, however, when having used the drum-shaped sealing container 22, as shown in Figure 3, the lid body 30 can be preliminarily removed from the main body 28, and the compounding material 10 for rubber kneading may be fed into the main body 28 while keeping this condition, to then close the lid body 30 later. For sealing and fixing the main body 28 with the lid body 30, publicly known means, such as a metal band (not shown) or a concave-convex mating, can be utilized, and are not particularly limited.

Furthermore, when also having used the boxy sealing container 22 as shown in Figure 4, as with the drum-shaped sealing container 22 described above, the lid body 30 can be preliminarily removed from the main body 28, and the compounding material 10 for rubber kneading may be fed into the main body 28, to then close the lid body 30 later. For sealing and fixing the main body 28 with the lid body 30, publicly known structure, such as a metal band (not shown) or concave-convex mating, can be utilized, and are not particularly limited.

<Method for producing rubber composition>

The rubber composition used in the present invention can be made by kneading, in addition to the sealing pouch (A) containing the liquid diene-based rubber (B), solid rubber, and each component such as a filler, vulcanizing agent or cross-linking agent, and other additives, if necessary. The sealing pouch (A) containing the liquid diene-based rubber (B) that can be directly fed into an apparatus with the entire pouch upon making a rubber composition, thereby renders excellent workability upon making of the rubber composition. Moreover, since the sealing pouch (A) made of a specific material is used as the sealing pouch, it adversely affects very little the characteristics of the obtained rubber composition. It is to be noted that solid rubber refers to rubber that can be handled in form of solid at 20°C, and the Mooney viscosity $ML_{1+4}$ of solid rubber at 100°C is usually in a range of 20 to 200, and the solid rubber is usually selected from at least one type of synthetic rubber and natural rubber. Examples of the other additives described above include, for example, a vulcanization accelerator, vulcanization auxiliary, silane coupling agent, softener, age resistor, antioxidant, wax, lubricant, light stabilizer, anti-scorching agent, processing aid, coloring agents such as pigments and dyes, flame retardant, antistatic agent, delusterant, anti-blocking agent, UV absorber, mold release agent, foaming agent, antibacterial agent, anti-mold agent, and fragrance.

The method for producing a rubber composition of the present invention is not particularly limited as long as each of the above components can be homogeneously mixed (kneaded). Examples of pieces of apparatus used in the production of rubber compositions include, for example, tangential type or intermeshing type closed-type kneaders, such as a kneader-ruder, Brabender, Banbury mixer, and internal mixer, single screw extruder, twin screw extruder, mixing rolls, and rollers. Production of the above rubber compositions can usually be carried out in a temperature range of 50 to 270°C and preferably in the range of 130 to 270°C. Carrying out mixing (kneading) in the temperature range of 130°C or higher promotes melting and dispersion of the sealing pouch, which tends to result in superior characteristics of the rubber composition.

One preferred aspect of the rubber composition of the present invention is that used as a cross-linked product (vulcanized rubber) thereof by cross-linking. Conditions and methods of vulcanization are not particularly limited, but it is preferably performed by using a vulcanization mold under the conditions of a vulcanization temperature of 120 to 200°C and a vulcanization pressure of 0.5 to 20 MPa.

Examples of applications in which the above rubber compositions and cross-linked products of the above rubber compositions can be used include, for example, tires, belts, anti-vibration rubber, wire-covered rubber, rolls, shoes, sealants, adhesives, greases, printing plate materials, OCR, OCA, paints, fenders, coating agents, gaskets, hoses, and brake pads.

The above rubber compositions or cross-linked products are suitably used, for example, as parts of a tire.

Examples of the parts of a tire in which the above rubber compositions and cross-linked products of the above rubber compositions can be used include, for example, treads (cap tread, under-tread), a sidewall, rubber reinforcement layer for run flat tires (for example, liner), rim cushion, bead filler, bead insulator, bead apex, clinch apex, belt, belt cushion, breaker, breaker cushion, chafer, chafer pad, and strip apex.

Example

The present invention will be described in more detail by way of Examples, however, the present invention is not limited to these Examples.

The materials used in Examples are as follows:

[Sealing pouch]

Sealing pouch (A-1): A pouch made of a low density polyethylene film (melting point 108°C; thickness 49 μm) (size: 20 cm in width and 30 cm in length)
Sealing pouch (A-2): A pouch made of a high density polyethylene film (melting point 129°C; thickness: 52 μm) (size: 20 cm in width and 30 cm in length)
Sealing pouch (A-3): A pouch made of an ethylene-vinyl acetate copolymer film (melting point: 86°C; thickness: 67 μm) (size: 20 cm in width and 30 cm in length)

The melting point of the polymer (polymer (a)), which was the material of each sealing pouch, was determined under the following measurement conditions. It is to be noted that the melting point was defined as a temperature at the top of the endothermic peak in the following measurement.

(Melting point measurement conditions)

A DSC measurement apparatus: DSC6200 (manufactured by Hitachi High-Tech Science Corporation)
Measurement temperature range: 30°C to 200°C
Rate of temperature rise: 10°C/min.

[Sealing container]

Sealing container (C-1): A pouch made of an aluminum laminated film (layer structure: polyethylene terephthalate 12 pm/polyethylene 15 um/aluminum 7 pm/polyethylene 20 μm/linear low density polyethylene 100 μm) (size: 28 cm in width, 38 cm in length; water vapor transmission rate: 0.2 $g/m^2 \cdot 24h$)
Sealing container (C-2): A pouch made of a high density polyethylene film (thickness: 52 μm) (size: 28 cm in width and 38 cm in length; water vapor transmission rate: 4.7 $g/m^2 \cdot 24h$)
Sealing container (C-3): A 19 L pail for non-hazardous materials with a gasket and a removable type top lid in band-fastening manner, in accordance with JIS Z 1620 (steel pails) (material: tin-free steel; thickness of the same portion: approximately 0.4 mm; water vapor transmission rate: less than 0.1 $g/m^2 \cdot 24h$)

It is noted that the water vapor transmission rate was a value obtained in accordance with the JIS Z 0208 cup method at a temperature of 40°C and humidity of 90% RH. For the sealing container (C-3), the measurement was carried out on a plate made of the same material with the same thickness.

[Liquid diene-based rubber]

The liquid diene-based rubber (B1-1) made in Production Example 1 below.

[Production Example 1]

(Making of unmodified liquid diene-based rubber (B'-1))

A thoroughly-dried 5 L autoclave was substituted with nitrogen, to which was added 1,280 g of cyclohexane and 66 g of sec-butyl lithium (a 10.5% by mass cyclohexane solution), and raised to a temperature of 50°C, and then 1,350 g of butadiene was added thereto successively under stirring conditions while controlling a polymerization temperature to 50°C to carry out polymerization for 1 hour. The polymerization reaction was then terminated by addition of methanol to obtain a polymer solution. Water was added to the resulting polymer solution and stirred to wash the polymer solution with water. The stirring was completed, the polymer solution phase and the water phase were confirmed to be

separated, and then water was separated. The polymer solution after washing was vacuum dried at 70°C for 24 hours to obtain unmodified liquid diene-based rubber (B'-1).

(Modification of unmodified liquid diene-based rubber (B'-1))

Subsequently, to an autoclave with a capacity of 1 L was added 700 g of the resulting unmodified liquid diene-based rubber (B'-1), and the resultant was degassed with nitrogen under stirring at 60°C for 3 hours. 1.0 g of 1,1-bis(t-butyl peroxy)cyclohexane and 50 g of (3-mercaptopropyl)triethoxysilane were added and reacted at 110°C for 8 hours to obtain liquid diene-based rubber (B1-1).

The series of operations was repeated several times to make liquid diene-based rubber (B1-1) to be used in the following Examples.

[Example 1]

(Making of compounding material for rubber kneading)

The sealing pouches (A-1) with width of 20 cm and length of 30 cm were double bagged, 800 g of the liquid diene-based rubber (B1-1) made in the above Production Example 1 was loaded inside the innermost pouch, the openings of sealing pouches (A) double bagged were sealed by heat sealing to make a compounding material (1) for rubber kneading.

(Making of sealed package)

To a bag-shaped sealing container (C-1) with width of 28 cm and length of 38 cm was fed the compounding material (1) for rubber kneading, and the opening was sealed by heat sealing to make a sealed package (1).

[Example 2]

A compounding material (2) for rubber kneading and a sealed package (2) were made in the same manner as in Example 1, except that the sealing pouch (A-1) was replaced with the sealing pouch (A-3). A stability test of the obtained sealed package (2) was performed according to the following conditions. The results are shown in Table 1.

[Example 3]

(Making of sealed package)

The compounding material (1) for rubber kneading made in the same manner as in Example 1 was fed from an opening of a pail that was a sealing container (C-3), and a top lid was fastened to the body of the pail with a band to make a sealed package (3). A stability test of the obtained sealed package (3) was conducted according to the following conditions. The results are shown in Table 1.

[Reference Example 1]

A stability test of the compounding material (1) for rubber kneading itself, which was made in the same manner as in Example 1, was conducted according to the following conditions. The results are shown in Table 1.

[Reference Example 2]

A compounding material (3) for rubber kneading was made in the same manner as in Example 1, except that the sealing pouch (A-1) was replaced with the sealing pouch (A-2). A stability test of the obtained compounding material (3) for rubber kneading was conducted according to the following conditions. The results are shown in Table 1.

[Reference Example 3]

A stability test of the compounding material (2) for rubber kneading itself, which was made in the same manner as in Example 2, was conducted according to the following conditions. The results are shown in Table 1.

[Reference Example 4]

(Making of sealed package)

A sealed package (1') was made in the same manner as in Example 1 by using the compounding material (1) for rubber kneading, except that the sealing container (C-1) was replaced with the sealing container (C-2). A stability test of the obtained sealed package (1') was conducted according to the following conditions. The results are shown in Table 1.

(Stability test)

The sealed package or compounding material for rubber kneading, obtained in each of Examples and Reference Examples was placed in a constant temperature and humidity chamber and stored for 4 weeks at a temperature of 60°C and a humidity of 85% Rh.

Thereafter, either thereof was removed from the constant temperature and humidity chamber and the liquid diene-based rubber (B1-1) that had been loaded in the sealing pouch was taken out. The rate of change in melt viscosity, rate of change in functional groups, and rate of change in multimer area ratio, of the liquid diene-based rubber (B1-1) were determined as follows, respectively, to evaluate stability of the sealed packages or compounding materials for rubber kneading.

(Rate of change in melt viscosity)

The rate of change in melt viscosity can be calculated from melt viscosity values of the liquid diene-based rubber (B1-1) at 38°C before and after the aforementioned stability test as follows:

Rate of change in melt viscosity = [{(melt viscosity after stability test) - (melt viscosity before stability test))/(melt viscosity before stability test)} × 100]

It is noted that the melt viscosity of the liquid diene-based rubber (B1-1) at 38°C was measured by using a Brookfield viscometer (Type B viscometer) (manufactured by Brookfield Engineering Labs. Inc.).

(Rate of change in functional groups)

The rate of change in functional groups contained in the liquid diene-based rubber (B1-1) can be calculated from concentration values of functional groups before and after the stability test as follows:

Rate of change in functional groups = [{(concentration of functional groups after stability test) - (concentration of functional groups before stability test))/(concentration of functional groups before stability test)} × 100]

The concentration of functional groups refers to the number of functional groups bonded to a conjugated diene relative to the mass of the monomer of a conjugated diene. The concentration of functional groups can be calculated from an area ratio of an area of the peak derived from the functional group and an area of the peak derived from the polymeric main chain by using $^{1}H$-NMR or $^{13}C$-NMR. It is to be noted that the peak derived from the functional group of the liquid diene-based rubber (B1-1) refers to the peak derived from an alkoxy group.

(Rate of change in multimer area ratio)

The rate of change in multimer area ratio can be calculated from values of the multimer area ratio before and after the stability test as follows:

Rate of change in multimer area ratio = [{(multimer area ratio after stability test)-(multimer area ratio before stability test))/(multimer area ratio before stability test)} × 100]

From the GPC chromatogram obtained by gel permeation chromatography (GPC) measurement, a proportion of polymers in a region of Mt (peak top molecular weight) × 1.45 or more was calculated, which was used as a multimer area ratio.

(Measurement of Mt and chromatogram by GPC)

The Mt and chromatogram of the liquid diene-based rubber (B1-1) were obtained by GPC (gel permeation chromatography) in terms of standard polystyrene molecular weight. The measurement apparatus and conditions are as follows: Apparatus: A GPC apparatus "GPC8020" manufactured by Tosoh Corporation

Separation column: "TSKgel G4000HXL" manufactured by Tosoh Corporation
Detector: "RI-8020" manufactured by Tosoh Corporation Eluent: Tetrahydrofuran
Eluent flow rate: 1.0 ml/min
Sample concentration: 5 mg/10 ml
Column temperature: 40°C

[Table 1]

| | Example | | | Reference Example | | | Comparative Example |
|---|---|---|---|---|---|---|---|
| | 1 | 2 | 3 | 1 | 2 | 3 | 1 |
| Sealing pouch (A) | A-1 | A-3 | A-1 | A-1 | A-2 | A-3 | A-1 |
| Sealing container (C) | C-1 | C-1 | C-3 | None | None | None | C-2 |
| Rate of change in melt viscosity | 20 | 2 | 54 | 318 | >1900 | 235 | 758 |
| Rate of change in functional groups | 0 | -1 | -2 | -8 | -6 | -6 | -5 |
| Rate of change in multimer area ratio | 28 | 6 | 25 | 81 | 90 | 70 | 78 |

Reference Signs List

10 Compounding material for rubber kneading

12 Opening

16 Sealed region

20 Sealed package

22 Sealing container

24 Inner space

26 Sealed region

28 Main body

30 Lid body

32 Opening

A Sealing pouch

B Liquid diene-based rubber

## Claims

**1.** A compounding material for rubber kneading, comprising:

a sealing pouch (A) with a thickness of 30 to 100 μm that is made of a polymer (a) with a melting point of 60 to 140°C, and
a liquid diene-based rubber (B) sealed inside the sealing pouch (A).

**2.** The compounding material for rubber kneading according to claim 1, wherein the polymer (a) is at least one selected from the group consisting of a low density polyethylene, a linear low density polyethylene, a high density polyethylene, an ethylene-vinyl acetate copolymer, and a syndiotactic-1,2-polybutadiene.

**3.** A sealed package, comprising:

a sealing container (C) with low water vapor permeability, and
the compounding material for rubber kneading according to claim 1 or 2 sealed inside the sealing container (C).

**4.** The sealed package according to claim 3, wherein a material of the sealing container (C) has a water vapor transmission rate of 4.0 $g/m^2 \cdot 24h$ or less.

**5.** The sealed package according to claim 3 or 4, wherein the sealing container (C) is a container made of at least one material selected from the group consisting of a metal plate, and a polymeric sheet or film on which an inorganic layer is stacked.

**6.** The sealed package according to any one of claims 3 to 5, wherein the liquid diene-based rubber (B) is a liquid diene-based rubber (B1) having a group that is highly reactive to water.

**7.** The sealed package according to any one of claims 3 to 6,
wherein a shape of the sealing container (C) is in form of a bag or a drum, or boxy.

**8.** The sealed package according to any one of claims 3 to 7, wherein a desiccant is further disposed inside the sealing container (C).

**9.** A method for producing a compounding material for rubber kneading, comprising at least:

a loading step of loading a liquid diene-based rubber (B) from an opening of a sealing pouch (A) with a thickness of 30 to 100 μm that is made of a polymer (a) with a melting point of 60 to 140°C, into the sealing pouch (A), and
a sealing step of sealing the opening of the sealing pouch (A) after the loading step.

**10.** The method for producing a compounding material for rubber kneading according to claim 9,
wherein, in the sealing step, the sealing of the opening is carried out by heat sealing.

**11.** A method for producing a sealed package, comprising at least:

a feed step of feeding the compounding material for rubber kneading according to claim 1 or 2 from an opening of a sealing container (C) with low water vapor permeability; and
a sealing step of sealing the opening of the sealing container (C) after the feed step.

**12.** The method for producing a sealed package according to claim 11,
wherein, in the sealing step, the sealing of the opening is carried out by heat sealing.

**13.** A method for producing a rubber composition, comprising a kneading step of kneading the compounding material for rubber kneading according to claim 1 or 2 and a solid rubber.

[Fig. 1]

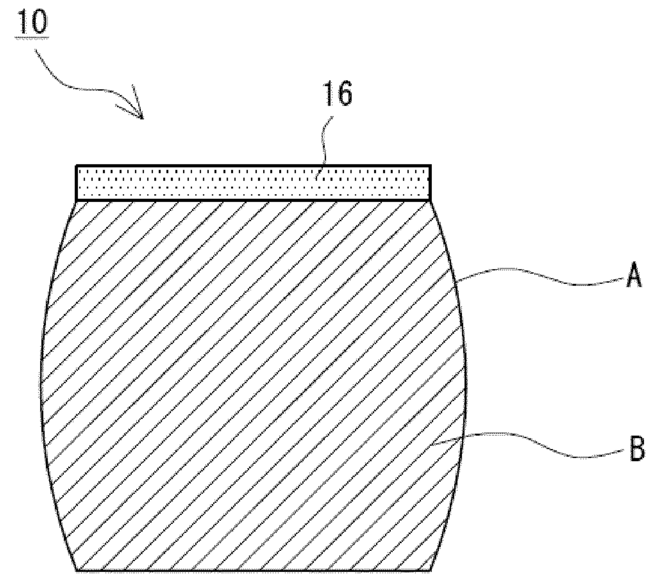


[Fig. 2]

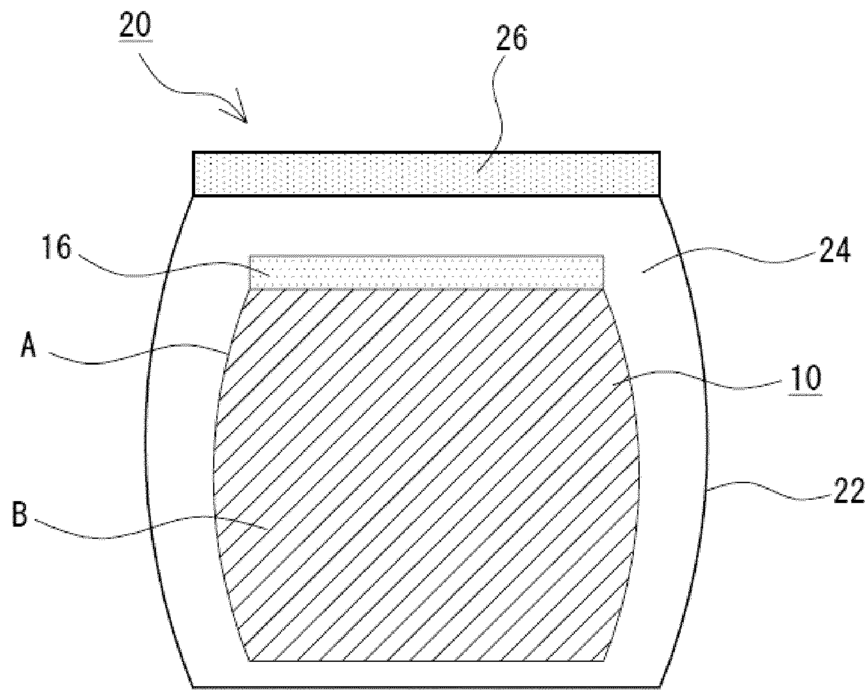

[Fig. 3]

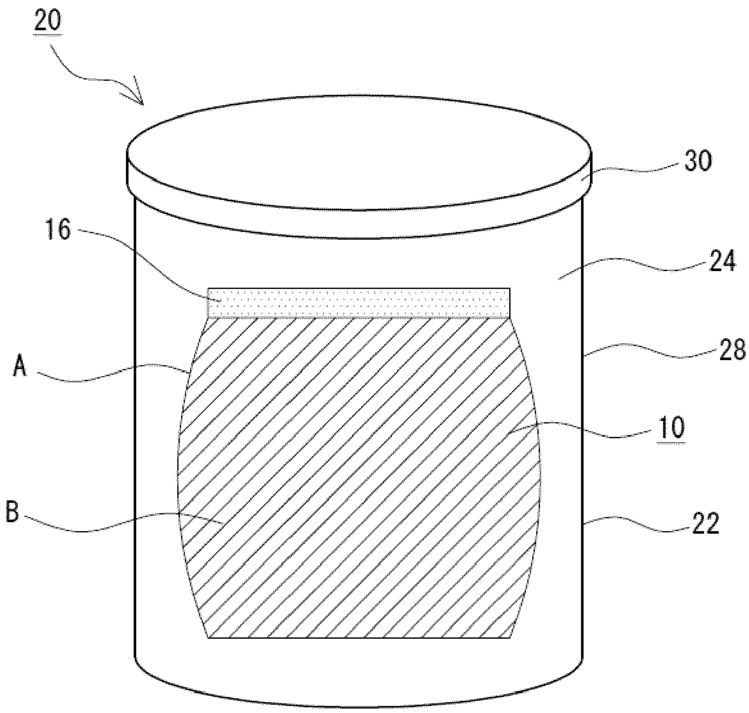


[Fig. 4]

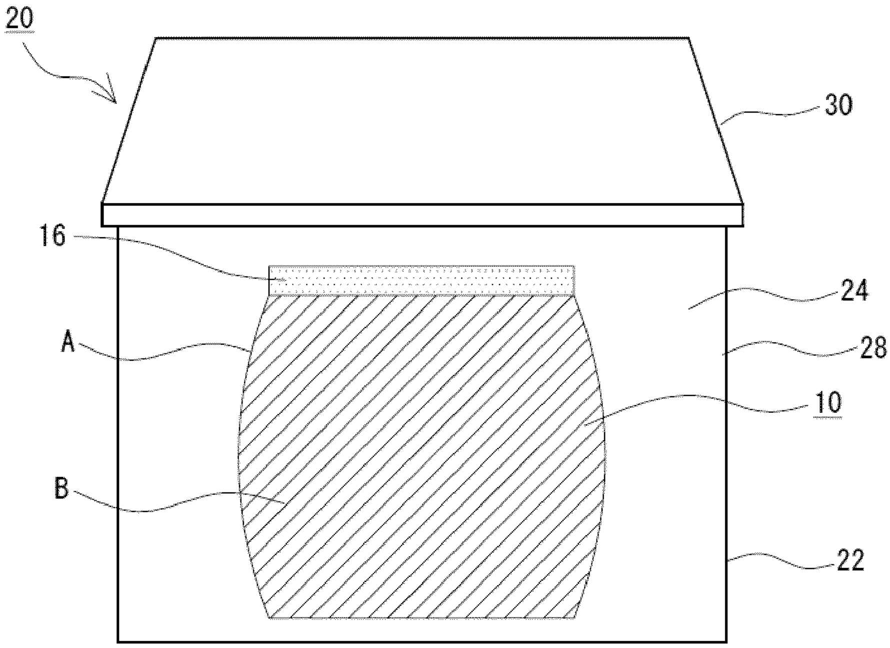

[Fig. 5]

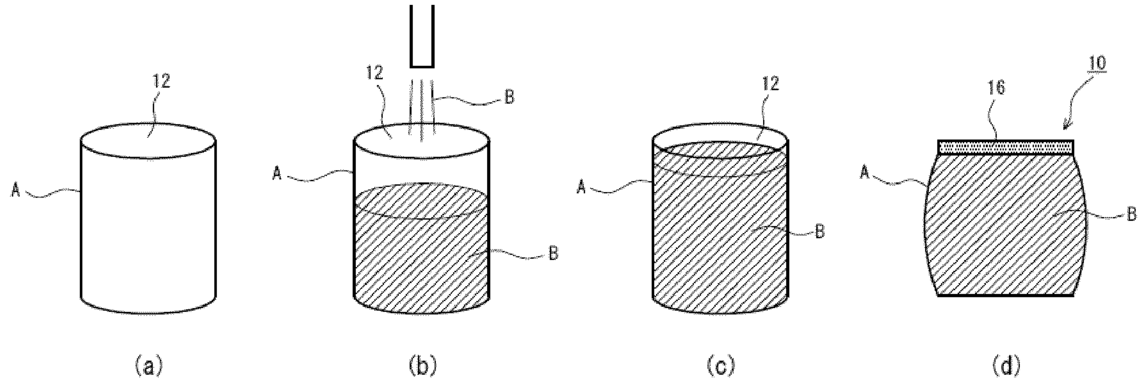
12
A
12
B
A
B
12
A
B
16
10
A
B
(a)
(b)
(c)
(d)

[Fig. 6]

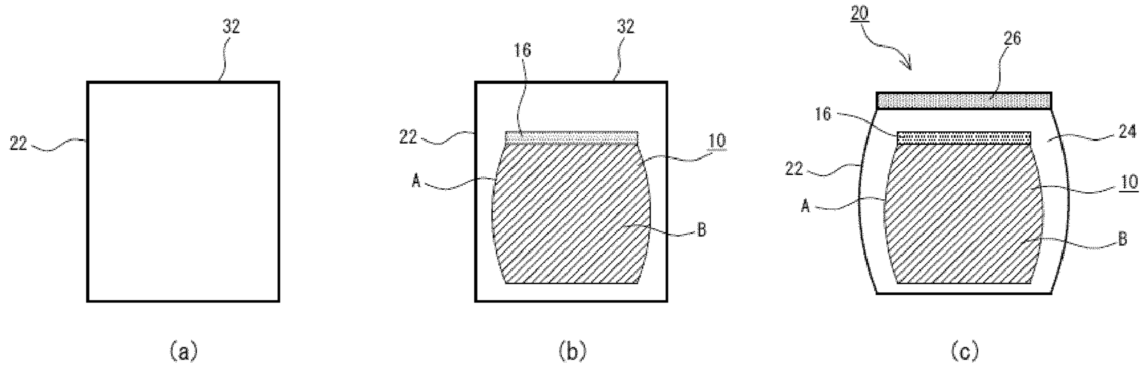
32
22
16
32
22
10
A
B
20
26
16
24
22
10
A
B
(a)
(b)
(c)

**INTERNATIONAL SEARCH REPORT**

International application No. **PCT/JP2022/011607**

**A. CLASSIFICATION OF SUBJECT MATTER**

***B65D 65/46***(2006.01)i; ***B65D 77/04***(2006.01)i; ***C08J 3/20***(2006.01)i; ***B29B 7/24***(2006.01)i
FI: B65D65/46; B29B7/24; B65D77/04 B; B65D77/04 F; C08J3/20 CEQ

According to International Patent Classification (IPC) or to both national classification and IPC

**B. FIELDS SEARCHED**

Minimum documentation searched (classification system followed by classification symbols)

B65D65/46; B65D77/04; C08J3/20; B29B7/24

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2010-36936 A (AUTO KAGAKU KOGYO KK) 18 February 2010 (2010-02-18) paragraphs [0017]-[0044], fig. 1-6 | 1-2, 9-10 |
| Y | paragraphs [0017]-[0044], fig. 1-6 | 3-8, 11-13 |
| Y | JP 2004-148705 A (BROTHER IND., LTD.) 27 May 2004 (2004-05-27) paragraphs [0017]-[0048], fig. 1-7 | 3-8, 11-12 |
| Y | JP 2012-507411 A (BASF SE) 29 March 2012 (2012-03-29) paragraphs [0161], [0167], [0190], [0208] | 3-8, 11-12 |
| Y | US 2017/0113864 A1 (AVANTOR PERFORMANCE MATERIALS, INC.) 27 April 2017 (2017-04-27) paragraph [0085] | 8 |
| Y | CN 112389870 A (TIANJIN CNRO SCIENCE TECHNOLOGY CO., LTD.) 23 February 2021 (2021-02-23) paragraph [0031] | 8 |
| Y | JP 2019-189744 A (SUMITOMO RUBBER IND., LTD.) 31 October 2019 (2019-10-31) paragraphs [0055]-[0057] | 13 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 May 2022** | **24 May 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

INTERNATIONAL SEARCH REPORT

International application No.
PCT/JP2022/011607

C. DOCUMENTS CONSIDERED TO BE RELEVANT

| Category* | Citation of document, with indication, where appropriate, of the relevant passages | Relevant to claim No. |
|---|---|---|
| Y | WO 2019/044893 A1 (KURARAY CO., LTD.) 07 March 2019 (2019-03-07) paragraph [0047] | 13 |

Form PCT/ISA/210 (second sheet) (January 2015)

**INTERNATIONAL SEARCH REPORT**
**Information on patent family members**

International application No.
**PCT/JP2022/011607**

| Patent document cited in search report | Publication date (day/month/year) | Patent family member(s) | Publication date (day/month/year) |
|---|---|---|---|
| JP 2010-36936 A | 18 February 2010 | (Family: none) | |
| JP 2004-148705 A | 27 May 2004 | US 2004/0134801 A1<br>paragraphs [0052]-[0088], fig. 1-9<br>EP 1415815 A2<br>CN 1498764 A | |
| JP 2012-507411 A | 29 March 2012 | US 2011/0220534 A1<br>paragraphs [0161], [0167], [0187], [0237]<br>WO 2010/052088 A1<br>EP 2342079 A1<br>CN 102271915 A | |
| US 2017/0113864 A1 | 27 April 2017 | WO 2015/148916 A2<br>EP 3122654 A2<br>KR 10-2017-0023786 A<br>CN 106687390 A | |
| CN 112389870 A | 23 February 2021 | (Family: none) | |
| JP 2019-189744 A | 31 October 2019 | (Family: none) | |
| WO 2019/044893 A1 | 07 March 2019 | US 2020/0254816 A1<br>paragraph [0070]<br>EP 3677638 A1<br>CN 111032769 A<br>KR 10-2020-0040833 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 57047337 A
- JP 55048231 A
- WO 2018043699 A
- JP 2011132298 A